# EUROPEAN PATENT APPLICATION

(11) **EP 4 775 004 A1**
(43) Date of publication of application: **15.07.2026**
(21) Application number: 26150311.4
(22) Date of filing: 06.01.2026
(51) Int. Cl.: A01B 51/02, B62D 49/06

(54) **WIDE-TRACK TRACTOR**

(30) Priority: 10.01.2025 BE 202505021
(71) Applicant: Jogro BV, 8920 Langemark-Poelkapelle (BE)
(72) Inventor: STAELENS, Joris, 8920 Langemark-Poelkapelle (BE)
(74) Representative: Hostens, Veerle

(57) **Abstract**

The present invention relates to a wide-track tractor (1), comprising a frame (2) which extends in a width direction (B), wherein the frame (2) is provided with one or more length transport elements (3) which are configured to be movable in a longitudinal direction (L), perpendicular to the width direction (B), wherein the frame (2) is furthermore provided with a holder (4) which is configured in order to attach an agricultural tool (5) thereto, wherein the holder (4) is arranged so as to be rotatable with respect to the frame (2) in order to rotate an agricultural tool (5) attached to the holder (4) between a first and second position, wherein an agricultural tool (5) is respectively provided in the first position to perform an operation in a first direction along the longitudinal direction (L) and is provided in the second position to perform an operation in a second direction, opposite to the first direction, along the longitudinal direction (L).

## Description

The present invention relates to a wide-track tractor, comprising a frame which extends substantially in a width direction, wherein the frame is provided with one or more longitudinal transport elements which are configured to be movable in a longitudinal direction, perpendicular to the width direction, wherein the frame is furthermore provided with a holder which is configured in order thereby to attach an agricultural tool to the frame, wherein each agricultural tool is configured to perform an operation in a specific direction along the longitudinal direction. The present invention furthermore relates to a method for working a field by means of such a wide-track tractor.

Such a wide-track tractor, which generally comprises a frame which is at least 3m wide, is substantially used to perform operations on a field, which can be divided into several crop rows, wherein the wide-track tractor performs an operation on several such crop rows which may be provided with these crops by means of the wide-track tractor or wherein operations may be performed on or between crops by means of this wide-track tractor. This operation is always performed by means of an agricultural tool and may be, for example, a soil treatment by means of, for example, a plough, harrow, subsoiler, roller, weeder or may also be a fertilizing operation or a sowing operation or a harvesting operation or an irrigation operation by means of, for example, a sprinkler. These agricultural tools are usually configured to perform an operation in a single direction of movement in an operation row, and it is impossible to perform the operation in an opposite direction of movement because this could result in damage to a tool. Such an operation row may, for example, coincide with a crop row, but may also be a row between the crop rows or may be a row across several crop rows.

A standard tractor is usually limited in the width direction, because such a tractor always has to be able to move between fields, for example by driving on the public roads between the fields. A first solution to this is to provide a folding frame, so that the wide frame, to which tools may be attached, can be folded in before the tractor drives on the road, as is proposed in EP0827684A2. However, with such a system, it is very difficult to widen the frame, as it still has to be possible to fold in the latter correctly. In addition, it is not possible to use such a tractor for every type of agricultural tool, since some agricultural tools are too heavy or too unwieldy to be able to be folded in compactly as in EP0827684A2.

Wide-track tractors, such as for example the wide-track tractor shown in WO9007866A2, do not have this drawback because these wide-track tractors can be driven in two different orientations: a length orientation in which such a wide-track tractor can be driven along the longitudinal direction in order to work the field and a width orientation in which the wide-track tractor can be driven along the width direction in order, inter alia, to move the wide-track tractor between fields. Since the frame extends mainly along the width direction, the frame will be much narrower in the longitudinal direction, as a result of which the wide-track tractor can readily be driven on the road in the width direction. When working the field, it can be displaced in the longitudinal direction, making it possible to work the field across a wider distance. By comparison with a standard tractor, such a wide-track tractor therefore has the advantage that it is possible to treat several crop rows next to one another with one movement by using one and the same movement of the wide-track tractor. EP0793411B1 describes such a wide-track tractor in which the wheels can in addition switch very easily between the width orientation and the length orientation, as a result of which it becomes even simpler to switch between these orientations. More recent wide-track tractors, such as the one described in EP3661345B1, even use rotatable caterpillar tracks to make it even easier to switch between the width orientation and the length orientation.

However, a field usually comprises many crop rows, as a result of which several driving movements will still be necessary, even for a very wide wide-track tractor, to work a field. As a result thereof, the field is divided into a number of transport rows, with such a wide-track tractor always being moved via a transport row in order thus to work the field. At the end of such a transport row, the wide-track tractor has to turn around between the transport rows in order to ensure that the tools always have the correct orientation on the frame of the wide-track tractor to successfully work the crop rows.

However, as a result thereof, wide-track tractors are only being used on very extensive fields, despite their many advantages, since it is often very cumbersome or impossible to carry out this reversing movement in smaller fields as there are often obstacles, such as for example canals or trees or posts, next to the fields. Moreover, the wider the wide-track tractor, the more difficult it becomes to carry out this reversing movement in practice. The time saving obtained from treating several crop rows then no longer makes up for the time loss caused by these difficult reversing movements. In addition, the soil at the ends of the transport rows will be subjected to heavy loads locally, due to the wide-track tractor turning around. This results in the crops and/or the soil itself being damaged due to these reversing movements.

It is the object of the present invention to provide a wide-track tractor which makes it possible to work a field in a more simple and efficient way and with the soil being subjected to as little load as possible.

The object of the present invention is achieved by providing a wide-track tractor, comprising a frame which extends substantially in a width direction, wherein the frame is provided with one or more longitudinal transport elements which are configured to be movable in a longitudinal direction, perpendicular to the width direction, wherein the frame is furthermore provided with a holder which is configured in order thereby to attach an agricultural tool to the frame, wherein each agricultural tool is configured to perform an operation in a specific direction along the longitudinal direction, wherein the holder is arranged so as to be rotatable with respect to the frame in order to rotate an agricultural tool attached to the holder between a first position and a second position, wherein an agricultural tool in the first position is configured to perform an operation in a first direction along the longitudinal direction, and wherein an agricultural tool in the second position is configured to perform an operation in a second direction, opposite to the first direction, along the longitudinal direction.

By rotating the rotatable holder which allows rotation of an agricultural tool attached to the holder between the first position and the second position, it is possible to ensure that the aforementioned problematic reversing movement is prevented, since such a rotatable holder makes it readily possible always to orient the tools correctly. As a result thereof, working a field, which consists of, for example, a single transport row or several transport rows, by means of such a wide-track tractor becomes much easier. In addition, preventing reversing movements ensures that the soil of the field is subjected to much less load than is the case with the known wide-track tractors.

The frame of the wide-track tractor may have any arbitrary known form, such as a beam-shaped frame or a more asymmetrical frame, such as in EP3661345B1. This frame may be made of a metal, such as aluminium or steel, or any other material from which, for example, tractor parts are manufactured or which is suitable for this purpose. The one or several holders which are provided on the frame are preferably also made of such a material.

In specific embodiments, the frame is preferably provided with several holders which may be arranged next to one another, for example in the width direction, on the frame in order to treat several crop rows in one transport movement.

The longitudinal transport elements may comprise one or several wheels or caterpillar tracks or any other transport elements. Furthermore, these transport elements are preferably fitted to the wide-track tractor in a symmetrical way. The wide-track tractor is furthermore preferably provided with drive means to drive these transport elements, these drive means preferably driving each transport element separately, but alternatively it is also possible to drive these transport elements in a synchronous manner. The drive means are preferably electrical or hydraulic drive means, but may alternatively or additionally also comprise pneumatic or any other form of drive means. In alternative embodiments, it is also possible for the wide-track tractor not to comprise drive means, and for this wide-track tractor always to be pulled or pushed by an auxiliary tractor or another auxiliary system. Obviously, it is also possible for the wide-track tractor to be both pulled and pushed and also to comprise drive means. To this end, the wide-track tractor is preferably furthermore provided with a towing hook or a similar system.

Preferably, the one or several rotatable holders are configured to be freely rotatable. As a result thereof, when the field consists of crop rows which are not straight, but which, for example, comprise bends, these one or several rotatable holders and the one or several corresponding agricultural tools attached to the holder will be passively rotated through corresponding angles as a result of the driving movement through the bends.

The wide-track tractor is furthermore preferably provided with rotation means to actively rotate this/these rotatable holder(s). These rotation means are preferably also configured to rotate an agricultural tool attached to a holder between the first and second position. Usually, a rotation through an angle of approximately 180° is required in order to rotate between the first position and the second position. If there is an additional passive rotation due to the movements of the wide-track tractor, as described above, then this angle may deviate from 180°. Preferably, the rotation means are configured to be able to rotate through an angle of virtually 360°, as a result of which virtually all angles of rotation are possible.

The holder is furthermore preferably at least displaceable with respect to the frame along the width direction. As a result thereof, the wide-track tractor has additional flexibility, and it is possible to adjust, for example, the distance between the agricultural tools, so that the wide-track tractor can be used in various fields having a different row distance between the crop rows. In addition, this makes it possible, for example, to use the wide-track tractor in fields where the wide-track tractor comprises several operation rows in a single transport row, wherein the holders can easily be displaced in the width direction in order to switch between operation rows. To this end, the frame may be provided with a displacement means, such as rails or a cable system or the like, to displace this holder with respect to the frame, and the wide-track tractor may, in addition, be provided with drive means for displacing one or several holders.

Preferably, the aforementioned agricultural tool is a first agricultural tool and, in a preferred embodiment, the holder is furthermore configured for attaching a second agricultural tool thereto which is configured to be arranged on a different side of the frame than the first agricultural tool, wherein this second agricultural tool is configured to perform an operation in the same direction along the longitudinal direction as the first agricultural tool. As a result thereof, the wide-track tractor will, for example, be able successively to perform different operations on the same crop rows by using the same movement. Preferably, this first agricultural tool and this second agricultural tool are provided on either side of the frame. The combination of a first and a second agricultural tool on either side of the frame ensures that the holders can be balanced in a reliable manner, as a result of which the wide-track tractor becomes very stable. During rotation of the holder, both agricultural tools will then be rotated together between the first and the second position. In specific embodiments, it is in this case also possible for the holder to be configured to attach a counterweight thereto instead of the second agricultural tool. In this way, the counterweight and the second agricultural tool can be swapped, depending on the situation, in order always to ensure that the wide-track tractor remains very stable.

In a specific embodiment, the holder, which is configured for attaching thereto a second agricultural tool to another side of the frame, comprises first fastening means for attaching the first agricultural tool thereto, and second fastening means for attaching the second agricultural tool thereto, wherein the first fastening means and/or the second fastening means are displaceable with respect to the holder in order to be able to compensate for a difference in weight between the agricultural tools. These first and/or second fastening means may, for example, be displaceable with respect to each other by means of a telescopically extendable arm or pivotable arm or a pneumatic or hydraulic plunger or a mechanically adjustable rod system or the like. As a result thereof, it is possible, for example, to attach a relatively heavy agricultural tool and a relatively light agricultural tool to the holder at the same time and use them when working the field. In addition, as a result thereof it is also possible to use the wide-track tractor in more hilly areas, in which case the agricultural tools can always be displaced in an optimum manner in order to optimize the stability of the wide-track tractor in all types of environments.

This displacement is preferably also automatically adjustable by means of control means provided for this purpose, so that this optimum displacement can be carried out in a dynamic fashion.

Preferably, the holder is furthermore configured to be able to compensate for this difference in weight between the agricultural tools during rotation of the holder. As a result thereof, it is always possible to perform this rotation in a simple manner.

Additionally or alternatively, it is also possible in some embodiments for the holder, which is configured to attach a counterweight thereto instead of the second agricultural tool, to comprise first fastening means for attaching the first agricultural tool thereto, and second fastening means for attaching the counterweight thereto, wherein the first fastening means and/or the second fastening means are displaceable with respect to the holder in order to be able to compensate for a difference in weight between the first agricultural tool and the counterweight on another side of the frame. These first and/or second fastening means may for example be displaceable with respect to each other by means of a telescopically extendable arm or pivotable arm or a pneumatic or hydraulic plunger of a mechanically adjustable rod system or the like. As a result thereof, it also becomes possible to use the wide-track tractor in more hilly areas with only one agricultural tool by always displacing the agricultural tool in an optimum manner with respect to the counterweight so as to optimize the stability of the wide-track tractor in all kinds of environments.

This displacement is preferably also automatically adjustable by means of control means provided for this purpose, so that this optimum displacement can be carried out in a dynamic fashion.

Preferably, the holder is furthermore configured to be able to compensate for this difference in weight between the first agricultural tool and the counterweight during rotation of the holder. As a result thereof, it is always possible to carry out this rotation in a simple manner.

In this case as well, the counterweight and the second agricultural tool can be swapped in some preferred embodiments, depending on the situation, in order to always ensure that the wide-track tractor remains very stable.

In a preferred embodiment, the holder is furthermore at least arranged so as to be partly displaceable with respect to the frame along a vertical direction, perpendicular to the longitudinal direction and perpendicular to the width direction, in order to displace an agricultural tool attached to the holder between a rotating position and an operating position, wherein an agricultural tool in the rotating position is rotatable between the first position and the second position, and wherein an agricultural tool in the operating position is configured to perform an operation in the first position or the second position. To this end, the wide-track tractor is preferably provided with a lifting system or hoisting system to displace the holder with respect to the frame along the vertical direction. Due to the displaceability of the holder along the vertical direction, it is possible to make the wide-track tractor much more flexible, as a result of which it also becomes possible, for example, to rotate agricultural tools which would possibly only be rotatable during the operating position in order to be able to follow bends in the crop rows, but would not normally be rotatable between the first position and the second position, due to the fact that an agricultural tool performs for example a soil treatment in the operating position, as a result of which no rotation is possible between the first position and the second position without working the soil in an undesirable circle of rotation.

Preferably, the above-described holder is a first holder on the frame and the frame is provided with a second, similar holder, wherein the first holder is at least partly displaceable to above the frame and the second holder is at least partly displaceable to below the frame in order each to displace an agricultural tool attached to the holder to the rotating position.

Preferably, the wide-track tractor is furthermore convertible between a longitudinal position, in which the wide-track tractor is configured to be movable along the longitudinal direction, and a width position, in which the wide-track tractor is configured to be movable along the width direction. It is mainly the combination of this convertibility and the rotation of the holders which makes it possible for the wide-track tractor to work a field in a very efficient way. As a result thereof, it becomes readily possible to switch between different transport rows without the aforementioned reversing movements.

This wide-track tractor is preferably convertible by providing the frame with one or more width transport elements which are configured to be movable in the width direction.

Preferably, the length transport elements are to this end more specifically rotatable between the longitudinal position, which corresponds to the aforementioned length orientation, and the width position, which corresponds to the aforementioned width orientation, so that these, in the width position, are designed as such width transport elements. This may be achieved, for example, by making these length transport elements rotatable, so that they are able to rotate through 90° between the longitudinal position and width position, as is known from EP0793411B1. This renders the wide-track tractor highly efficient.

In alternative embodiments, the wide-track tractor may comprise one or several width transport elements which are no length transport elements. These width transport elements may still be manufactured in the same way as the length transport elements and/or may be controllable in the same way. In this case, the width transport elements and/or the length transport elements may be vertically displaceable by being, for example, foldable, so that the wide-track tractor can easily be converted between the longitudinal position and the width position. It is also possible to provide the wide-track tractor with a towing hook or such a system to move the wide-track tractor in the width direction.

Preferably, a transport element, be it one of the width transport elements or one of the length transport elements, is displaceable with respect to the frame along the width direction. To this end, the frame may be provided with a displacement means, as is the case with the abovementioned possible displacement of a holder with respect to the frame along the width direction. This makes it possible to make the wide-track tractor more flexible when changing between a position in which it will be used on a field and a position in which the wide-track tractor will be driven between fields. This also makes it possible to stabilize the wide-track tractor more reliably in hilly areas.

To this end, the wide-track tractor may in addition preferably be provided with drive means for displacing the one or more transport elements which are arranged so as to be displaceable along the width direction of the frame.

Providing a said transport element so as to be displaceable in the width direction with respect to the frame also has similar advantages in wide-track tractors in which the holder is not arranged so as to be rotatable with respect to the frame, but is configured, for example, like the wide-track tractors according to the prior art, wherein one or more transport elements of such a wide-track tractor may be arranged so as to be displaceable along the width direction.

Preferably, the frame comprises several parts which are displaceable with respect to each other in order to adjust a dimension of the frame in the width direction. This renders the wide-track tractor even more flexible. These several parts may, for example, be displaceable with respect to each other by configuring these parts so as to be displaceable telescopically with respect to each other or by using foldable parts or the like.

The frame is furthermore preferably provided with a cab which is displaceable with respect to the frame. This displacement may be a displacement along the width direction, the longitudinal direction, the vertical direction or may be a rotation about any arbitrary rotation axis or even a combination of one or more of these displacements and/or rotations. To this end, the frame may be provided with an aforementioned rotation means or displacement means or hoisting system or the like. This offers the driver of the wide-track tractor more possibilities to be able to steer the wide-track tractor in a reliable manner. To this end, the wide-track tractor may, in addition, preferably be provided with drive means for displacing the cab along one or more of said directions and/or for rotating this cab.

In addition, the object of the invention is also achieved by providing a method for working a field by means of a wide-track tractor as described above, this method comprising the following steps:
a. rotating the holder for rotating an agricultural tool which is attached to the holder to the first position;
b. moving the wide-track tractor along the longitudinal direction with the length transport elements in the first direction in order to work the field;
c. rotating the holder for rotating the agricultural tool to the second position; and
d. moving the wide-track tractor along the longitudinal direction with the transport elements in the second direction in order to work the field.

Obviously, the wide-track tractor may also comprise several holders and/or several agricultural tools which are preferably all rotatable according to this method. The wide-track tractor may have any characterizing features or combination of characterizing features according to the invention as described above.

Preferably, a holder of the wide-track tractor is at least partly displaceable along the vertical direction with respect to the frame as described above and rotating the holder in order to rotate the agricultural tool is always performed by:
- displacing the holder for displacing the agricultural tool to the rotating position;
- rotating the holder for rotating the agricultural tool; and
- displacing the holder for displacing the agricultural tool to the operating position.

Preferably, the holder of the wide-track tractor is displaceable with respect to the frame along the width direction, as is described above, and step b of the aforementioned method comprises working the field using an agricultural tool in a first operation row, and step d of the aforementioned method comprises working the field using this agricultural tool in a second operation row, and the method furthermore comprises displacing the holder with respect to the frame in the width direction from the first operation row to the second operation row.

Preferably, the wide-track tractor is furthermore convertible between the width position and the longitudinal position, and step b of the aforementioned method comprises moving the wide-track tractor in a first transport row, and step d of the aforementioned method comprises moving the wide-track tractor in a second transport row, and the method furthermore comprises:
e. displacing the wide-track tractor away from the first transport row to the second transport row along the width direction.

Preferably, the wide-track tractor is furthermore provided with one or several width transport elements, and step e as described above furthermore comprises:
f. converting the wide-track tractor from the longitudinal position to the width position;
g. moving the wide-track tractor with the width transport elements along the width direction; and
h. converting the wide-track tractor from the width position to the longitudinal position.

Preferably, the wide-track tractor comprises length transport elements which are rotatable to form width transport elements, and step f or step h of the aforementioned method furthermore comprises converting the wide-track tractor from the longitudinal position to the width position by rotating the length transport elements, so that these function as width transport elements in the width position.

The present invention will now be explained in more detail by means of the following detailed description of some preferred embodiments of a wide-track tractor according to the present invention. The sole aim of this description is to give illustrative examples and to indicate further advantages and particulars of the present invention, and can therefore not be interpreted as a limitation of the area of application of the invention or of the patent rights defined in the claims.

In this detailed description, reference numerals are used to refer to the drawings attached hereto, in which:
- Fig. 1 diagrammatically shows a front view of an embodiment of a wide-track tractor according to the invention;
- Fig. 2 diagrammatically shows a top view of the embodiment of the wide-track tractor from Fig. 1 in a field; and
- Fig. 3 diagrammatically shows a side view of an alternative embodiment of a wide-track tractor according to the invention.

In the figures, embodiments of a wide-track tractor (1) according to the invention are diagrammatically shown in front view, top view and side view, respectively.

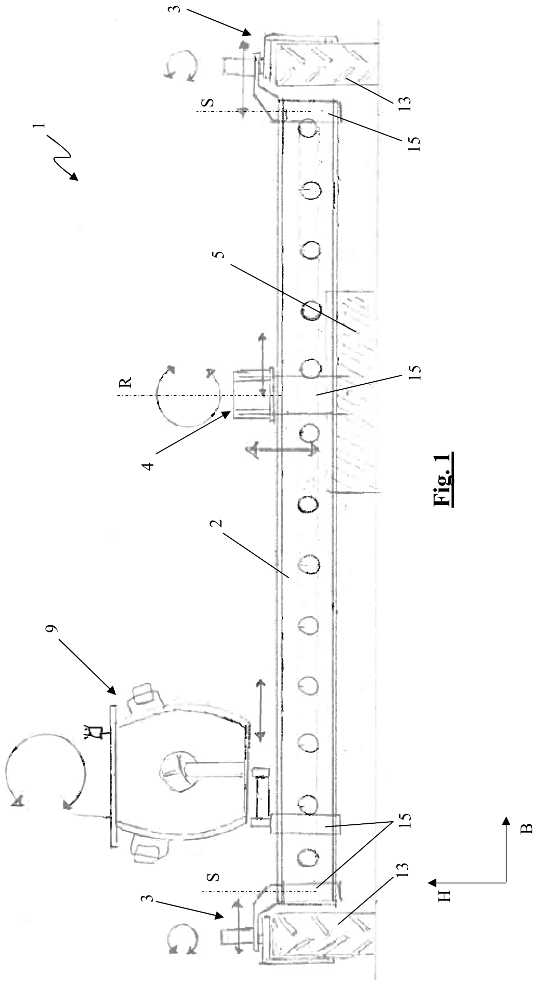

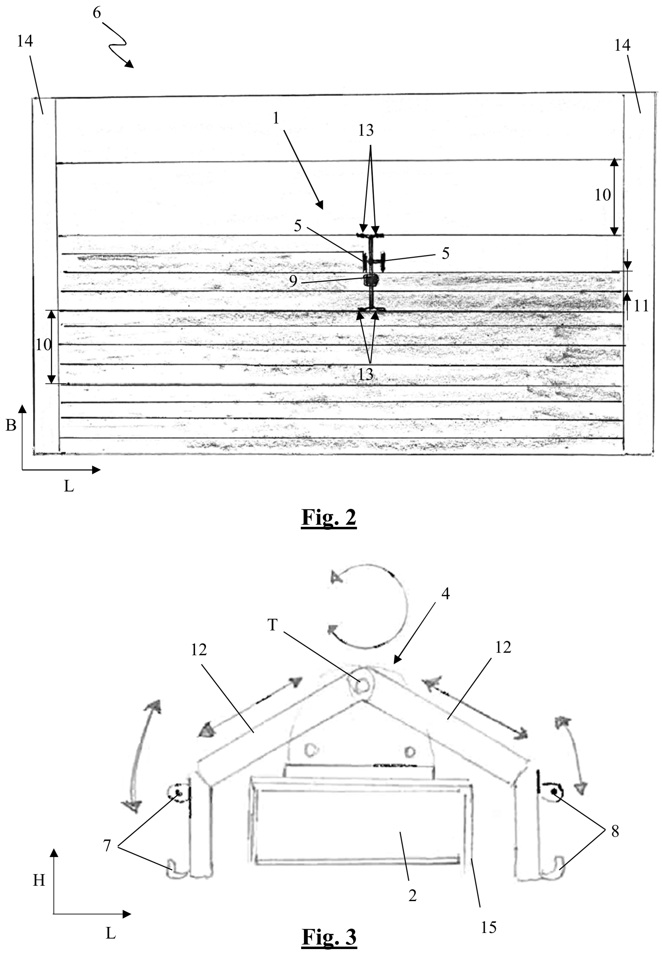

This wide-track tractor (1) in each case comprises a frame (2) which extends substantially in a width direction (B). This frame (2) may take a considerable number of forms and may be designed substantially as an I-shaped girder, as in Fig. 1, or may have a tubular profile, as in Fig. 3, but may also assume a large variety of alternative forms, such as for example a lattice girder, etc. The frame (2) may be of symmetrical construction with respect to an axle which extends along the width direction and/or with respect to an axle which extends along the longitudinal direction, but may, for example, also comprise one or more transverse legs which extend perpendicular to the width direction.

In its most extended state, the frame (2) may have a width along the width direction (B) of for example 12 m and may have a width along the width direction (B) in its most compact state of for example 3 m.

In the illustrated embodiment, the frame (2) has a fixed dimension in this width direction (B). Alternatively, the frame (2) may comprise several parts which are displaceable with respect to each other in order to adjust the dimension of the frame (2) in the width direction (B). Thus, the frame (2) may be designed, for example, as a chassis which is extendable along the width direction (B) or which comprises folding parts, etc.

In the illustrated embodiments, the frame (2) is provided with four transport elements (3) which each comprise a transport tyre (13) in order to move the respective transport element (3) across a terrain. Preferably, at least one such transport element (3) is provided, more preferably at least one such transport element (3) on both ends, viewed in the width direction, and still more preferable two such transport elements (3) are provided for each said end. Instead of said transport tyres (13), it is also possible, for example, for caterpillar tracks to be provided.

In the illustrated embodiments, the wide-track tractor (1) is convertible between a longitudinal position and a width position.

The longitudinal position of the wide-track tractor (1) is illustrated in the figures. In these, the transport elements (3) are configured to be movable in a longitudinal direction (L), perpendicular to the width direction (B), as a result of which the transport elements (3) are designed as length transport elements (3) in the longitudinal position of the wide-track tractor (1).

In the illustrated embodiments, the transport elements (3) are rotatable about a rotation axis (R) between the longitudinal position and the width position, so that these are designed as width transport elements (3) in the width position which are configured to be movable along the width direction (B).

In the longitudinal position, the tractor wheels (13) are, viewed in the width direction (B), in this case arranged on either side of both ends of the frame (2), as can be seen in Fig. 1, so that the full dimension of the wide-track tractor (1) in this width direction (B) is then more than 12 m. In the width position, the tractor wheels (13) are arranged on either side of the frame (2) within these dimension of the wide-track tractor (1), viewed in the width direction (B), so that this dimension of the wide-track tractor (1) for transport on the road then stays within the legally allowed length for normal transportation.

In alternative embodiments, the transport elements (3) are not displaceable between a said longitudinal position and a said width position and separate width transport elements may be provided to configure the wide-track tractor (1) so as to be movable along the width direction (B).

In the illustrated embodiments, the transport elements (3) are in addition also displaceable along the width direction (B) with respect to the frame (2).

In the illustrated embodiments, the frame (2) is in addition also provided with a cab (9) which is also displaceable on its own with respect to the frame (2). The cab (9) is displaceable with respect to the frame (2) both along the vertical direction (H) and along the width direction (B) and is in addition also rotatable with respect to the frame (2) about an axis along a vertical direction (H), perpendicular to the longitudinal direction (L) and perpendicular to the width direction (B).

The frame (2) is furthermore provided with a holder (4) comprising first fastening means (7) and second fastening means (8). A first agricultural tool (5) may be attached on a first side of the frame (2) on the first fastening means (7) and a second agricultural tool (5) or a counterweight on a second side of the frame (2) on the second fastening means (8). In Fig. 3, the first fastening means (7) and the second fastening means (8) are each displaceable with respect to the holder (4) by means of telescopically extendable arms (12) in order to be able to compensate for a difference in weight between the agricultural tools (5) or between an agricultural tool (5) and a counterweight.

The first agricultural tool (5) and the second agricultural tool (5) are both configured to perform an operation in a specific direction along the longitudinal direction (L). These agricultural tools (5) may be existing agricultural tools (5), such as an agricultural tool for a soil treatment, such as an aforementioned plough, harrow, subsoiler, roller, weeder, or an agricultural tool for a fertilizing operation or a sowing operation or a harvesting operation or an irrigation operation, etc. These agricultural tools (5) may also be agricultural tools which are especially made to be accommodated in a wide-track tractor according to the invention.

In alternative embodiments, a holder (4) may be configured in order to attach only one agricultural tool (5) thereto or a holder (4) may be configured in order to attach even more agricultural tools (5) thereto.

According to the invention, the holder (4) is arranged so as to be rotatable with respect to the frame (2), as a result of which the one or more (here two) agricultural tools (5) can be rotated between a first position, in which the agricultural tools (5) are configured to perform an operation in a first direction along the longitudinal direction (L), and a second position, in which the agricultural tools (5) are configured to perform an operation in a second direction, opposite to the first direction, along the longitudinal direction (L).

The illustrated holder (4) is furthermore also displaceable with respect to the frame (2) along the width direction (B).

In addition, the holder (4) is at least partly displaceable with respect to the frame (2) along the vertical direction (H) in order to displace the agricultural tools (5) between a rotating position and an operating position, wherein the agricultural tools (5) are rotatable in the rotating position between the first position and the second position, and wherein an agricultural tool (5) in the operating position is configured to perform an operation in the first position or the second position. In the embodiment from Fig. 3, the arms (12) by means of which the fastening means (7, 8) are fitted, are to this end pivotable with respect to a rotation axis (T) which extends along the width direction (B). Alternatively, these could also be attached in the wide-track tractor (1), for example, by means of a lifting system or another hoisting mechanism.

In alternative embodiments, several holders (4) may also be provided on the frame (2) which are each preferably at least partly displaceable along the vertical direction (H) in order to also install these so as to be rotatable between a respective first position and a respective second position. These holders (4) may be provided analogously so as to be displaceable and rotatable and may in this case, viewed in the width direction (B), always be arranged on the same side next to each other.

More specifically, in an alternative embodiment of a wide-track tractor (1) which is not illustrated, it is also possible to provide holders (4) in the wide-track tractor (1) so as to be displaceable and/or rotatable in alternative ways. Thus, for example, the illustrated holder (4) may be a first holder (4) on the frame (2), with a second holder (4) also being provided on the frame (2). The first holder (4) is in this case displaceable as far as above the frame (2) and the second holder (4) is displaceable as far as below the frame (2) in order to make it possible for these holders (4) to also change position with respect to each other viewed in the width direction (B) and/or to displace each one or more of the agricultural tools (5) attached to the holder (4) to the rotating position, so that these two holders (4) on either side of the frame (2) are rotatable between the first and second positions, respectively, viewed along the vertical direction (H).

In order to provide the one or more transport elements (3) and/or the one or more holders (4) and/or the cab (9) so as to be displaceable with respect to the frame (2) along the width direction, it is for example possible to provide it to be displaceable with respect to the frame (2) in a guiding manner, as is shown diagrammatically by means of a tubular guide element (15) which is arranged around the frame (2). In this case, this tubular guide element (15) may be provided so as to be displaceable with respect to the frame (2) in a guiding manner, for example by means of guide wheels. However, a large number of alternative ways are known to provide elements so as to be displaceable with respect to a frame (2) in a guiding manner.

Preferably, respective drive means are furthermore also provided to be able to bring about said displacements along the longitudinal direction (L) and/or the width direction (B) and/or along the vertical direction (H) and/or said rotations in a simple way. Such drive means may comprise electrical and/or hydraulic and/or pneumatic, etc. drive means. These may be configured to be operable from the cab (9) and/or these may be configured to be operable from a distance.

In order to be able to displace the wide-track tractor (1) on the road, the transport elements (3) are in this case preferably driven, so that tractor wheels (13) are controlled in pairs, as is the case with a standard vehicle. In order to displace this wide-track tractor (1) on the field, it is preferably controlled by regulating the speed, it being possible to drive tractor wheels (13) on one side of the frame (2) to move faster or slower than tractor wheels (13) on the other side of the frame (2).

The illustrated wide-track tractor (1) is configured to be displaceable by means of said drive means in both the width direction (B) and the longitudinal direction (L).

Alternatively and/or additionally, such a wide-track tractor (1) may also be provided with a towing hook or similar system in order to be able to pull or push it.

The principle of the invention may be explained by means of Fig. 2. Fig. 2 shows the wide-track tractor (1) while it moves across a field (6) along the longitudinal direction (L). In this case, the transport elements (3) move in transport rows (10), viewed in Fig. 2, from the left to the right, but also from the right to the left. It is possible to ensure that, every time the wide-track tractor (1) travels across the field (6), the agricultural tools (5) always treat a different treatment row (11), while the transport means (3) drive to and fro in the same transport row (10). In this case, the treatment row (11) may coincide with a crop row, but may also be a row between crop rows or may extend across several crop rows.

At the end of each treatment row (11), the agricultural tools (5) can easily change treatment row (11) by moving the holder (4) along the vertical direction (H) (by rotation of the arms (12) about rotation axis (T) and/or retracting or extending the arms (12)) in order to be able to rotate these through 180° with respect to the rotation axis (R) with respect to the frame (2) to orient the agricultural tools (5) in the opposite direction. The holder (4) may furthermore be displaced with respect to the frame (2) along the width direction (B) in order to be able to treat a subsequent treatment row (11). When all treatment rows (11) in a transport row (10) have been treated by the agricultural tools (5), the transport elements (3) may be rotated through 90° about rotation axis (S), so that the wide-track tractor (1) can easily be displaced on the headland (14) between the transport rows (10). Thereafter, the transport elements (3) can again be rotated through 90° about rotation axis (S) in order to be able to drive into a subsequent transport row (10).

The treatment rows (11) preferably have a width of 3 m, and there are preferably 4 treatment rows (11) per transport row (10), so that the transport rows (10) have an intermediate distance of 12 m. This corresponds more or less to the preferred width of the frame (2) which is 12 m.

## Claims

1. Wide-track tractor (1), comprising a frame (2) which extends substantially in a width direction (B), wherein the frame (2) is provided with one or more longitudinal transport elements (3) which are configured to be movable in a longitudinal direction (L), perpendicular to the width direction (B), wherein the frame (2) is furthermore provided with a holder (4) which is configured in order thereby to attach an agricultural tool (5) to the frame (2), wherein each agricultural tool (5) is configured to perform an operation in a specific direction along the longitudinal direction (L) **characterized in that** the holder (4) is arranged so as to be rotatable with respect to the frame (2) in order to rotate an agricultural tool (5) attached to the holder (4) between a first position and a second position, wherein an agricultural tool (5) in the first position is configured to perform an operation in a first direction along the longitudinal direction (L), and wherein an agricultural tool (5) in the second position is configured to perform an operation in a second direction, opposite to the first direction, along the longitudinal direction (L).

2. Wide-track tractor (1) according to Claim 1, **characterized in that** the holder (4) is displaceable with respect to the frame (2) along the width direction (B).

3. Wide-track tractor (1) according to any of the preceding claims, **characterized in that** said agricultural tool (5) is a first agricultural tool (5) and the holder (4) is configured for attaching a second agricultural tool (5) thereto which is configured to be arranged on a different side of the frame (2) than the first agricultural tool (5), and which is configured to perform an operation in the same direction along the longitudinal direction (L) as the first agricultural tool (5).

4. Wide-track tractor (1) according to Claim 3, **characterized in that** the holder (4) comprises first fastening means (7) for attaching the first agricultural tool (5) thereto, and comprises second fastening means (8) for attaching the second agricultural tool (5) thereto, wherein the first fastening means (7) and/or the second fastening means (8) are each displaceable with respect to the holder (4) in order to be able to compensate for a difference in weight between the agricultural tools (5).

5. Wide-track tractor (1) according to any of the preceding claims, **characterized in that** the holder (4) is arranged so as to be at least partly displaceable with respect to the frame (2) along a vertical direction (H), perpendicular to the longitudinal direction (L) and perpendicular to the width direction (B), in order to displace an agricultural tool (5) attached to the holder (4) between a rotating position and an operating position, wherein an agricultural tool (5) in the rotating position is rotatable between the first position and the second position, and wherein an agricultural tool (5) in the operating position is configured to perform an operation in the first position or the second position.

6. Wide-track tractor (1) according to Claim 5, **characterized in that** the holder (4) is a first holder (4) on the frame (2), and **in that** the frame (2) is provided with a second, similar holder (4), wherein the first holder (4) is at least partly displaceable to above the frame (2) and the second holder (4) is at least partly displaceable to below the frame (2) in order each to displace an agricultural tool (5) attached to the holder (4) to the rotating position.

7. Wide-track tractor (1) according to any of the preceding claims, **characterized in that** the wide-track tractor (1) is convertible between a longitudinal position, in which the wide-track tractor (1) is configured to be movable along the longitudinal direction (L), and a width position, in which the wide-track tractor (1) is configured to be movable along the width direction (B).

8. Wide-track tractor (1) according to Claim 7, **characterized in that** the frame (2) is provided with one or more width transport elements (3) which are configured to be movable in the width direction (B).

9. Wide-track tractor (1) according to Claim 8, **characterized in that** the length transport elements (3) are rotatable between the longitudinal position and the width position, so that these, in the width position, are designed as width transport elements (3).

10. Wide-track tractor (1) according to any of the preceding claims, **characterized in that** a transport element (3) is displaceable with respect to the frame (2) along the width direction (B).

11. Wide-track tractor (1) according to any of the preceding claims, **characterized in that** the frame (2) comprises several parts which are displaceable with respect to each other in order to adjust a dimension of the frame (2) in the width direction (B).

12. Method for working a field (6) by means of a wide-track tractor (1), **characterized in that** this wide-track tractor (1) is a wide-track tractor (1) according to any of the preceding claims, and that this method comprises the following steps:
a. rotating the holder (4) for rotating an agricultural tool (5) which is attached to the holder (4) to the first position;
b. moving the wide-track tractor (1) along the longitudinal direction (L) with the length transport elements (3) in the first direction in order to work the field (6);
c. rotating the holder (4) for rotating the agricultural tool (5) to the second position; and
d. moving the wide-track tractor (1) along the longitudinal direction (L) with the transport elements (1) in the second direction in order to work the field (6).

13. Method according to Claim 12, **characterized in that** the wide-track tractor (1) is a wide-track tractor (1) according to Claim 7, and **in that** step b comprises moving the wide-track tractor (1) in a first transport row (10), and **in that** step d comprises moving the wide-track tractor (1) in a second transport row (10), and **in that** the method furthermore comprises:
e. displacing the wide-track tractor (1) away from the first transport row (10) to the second transport row (10) along the width direction (B).

14. Method according to Claim 13, **characterized in that** the wide-track tractor (1) is a wide-track tractor (1) according to Claim 8, and **in that** step e comprises:
f. converting the wide-track tractor (1) from the longitudinal position to the width position;
g. moving the wide-track tractor (1) with the width transport elements (3) along the width direction (B); and
h. converting the wide-track tractor (1) from the width position to the longitudinal position.

15. Method according to Claim 14, **characterized in that** the wide-track tractor (1) is a wide-track tractor (1) according to Claim 9, and **in that** step f or step h comprises converting the wide-track tractor (1) from the longitudinal position to the width position by rotating the length transport elements (3), so that these function as width transport elements (3) in the width position.
